# EUROPÄISCHE PATENTSCHRIFT

(11) **EP 2 245 099 B1**
(45) Veröffentlichungstag und Bekanntmachung des Hinweises auf die Patenterteilung: **24.07.2013**
(21) Anmeldenummer: 09709498.1
(22) Anmeldetag: 12.02.2009
(51) Int. Cl.: C08G 18/10, C08G 18/12, C08L 51/08, C09D 151/08, C08G 18/42, C08G 18/66, C08G 18/76, C09D 5/02, C09D 7/12, C08G 18/08, C08F 283/00, C09D 175/04

(54) **WÄSSRIGER BESCHICHTUNGSSTOFF, VERFAHREN ZU SEINER HERSTELLUNG UND SEINE VERWENDUNG**
AQUEOUS COATING MATERIAL, A METHOD FOR THE PRODUCTION THEREOF AND THE USE THEREOF
PRODUIT DE REVÊTEMENT AQUEUX, SON PROCÉDÉ DE FABRICATION ET SON UTILISATION

(30) Priorität: 12.02.2008 DE 102008008779
(43) Veröffentlichungstag der Anmeldung: 03.11.2010
(73) Patentinhaber: BASF Coatings GmbH, 48165 Münster (DE)
(72) Erfinder: STEINMETZ, Bernhard, 97535 Rütschenhausen (DE); EMMERICH, Nadia, 97753 Karlstadt-Stetten (DE); WETTERICH, Matthias, 97508 Grettstadt (DE)
(74) Vertreter: Leifert & Steffan
(86) Internationale Anmeldenummer: PCT/EP2009/000982
(87) Internationale Veröffentlichungsnummer: WO 2009/100903

(56) Entgegenhaltungen:
- EP-A- 1 152 041
- WO-A-96/40511

## Beschreibung

### Gebiet der Erfindung

Die vorliegenden Erfindung betrifft einen neuen wässrigen Beschichtungsstoff, enthaltend mindestens ein gesättigtes, ungesättigtes und/oder mit olefinisch ungesättigten Verbindungen gepfropftes, ionisch und/oder nichtionisch stabilisiertes Polyurethan. Außerdem betrifft die vorliegende Erfindung ein neues Verfahren zur Herstellung eines wässrigen Beschichtungsstoffs. Des Weiteren betrifft die vorliegende Erfindung die Verwendung des neuen Beschichtungsstoffs und des nach dem neuen Verfahren hergestellten wässrigen Beschichtungsstoffs.

### Stand der Technik

Wässrige Beschichtungsstoffe, enthaltend mindestens ein gesättigtes, ungesättigtes und/oder mit olefinisch ungesättigten Verbindungen gepfropftes, ionisch und/oder nichtionisch stabilisiertes Polyurethan, sind bekannt. Sie können physikalisch, thermisch oder thermisch und mit aktinischer Strahlung gehärtet werden. Vorzugsweise enthalten sie farb- und/oder effektgebende Pigmente und werden zur Herstellung von farb- und/oder effektgebenden Lackierungen, insbesondere als Unidecklackierungen oder als Basislackierungen im Rahmen von Mehrschichtlackierungen, verwendet.

In der Serien-Erstlackierung von Automobilkarosserien (OEM) werden die Karosserien üblicherweise zunächst einer Kathodischen Tauchlackierung (KTL) und einer Lackierung mit Füller unterzogen. Nach verschiedenen Polier- und Schleifprozessen wird dann ein Decklack, beispielsweise bestehend aus einem Unidecklack oder aus einem Basislack und einem Klarlack, aufgebracht. Aus den Polier- und Schleifprozessen eventuell verbliebene Schleifriefen müssen durch den Decklack abgedeckt werden, da sie ansonsten auf der fertigen Lackierung sichtbar sind und dazu führen, dass die entsprechenden Karossen nochmals lackiert werden müssen, was mit großen finanziellen Einbußen einhergeht. Viele Unideck- und Basislacke weisen das Problem unzureichender Schleifriefenabdeckung auf.

Dem Fachmann bekannt sind derzeit folgende Methoden, um dieses Fehlerbild zu vermeiden:
- Erhöhung des Deckvermögens des Basislacks oder Unidecklacks,
- Veränderung der Benetzungsfähigkeit des Basislacks oder Unidecklacks auf dem Untergrund,
- Einbau von Füllstoffen in den Basislack oder Unidecklack zur Verminderung bzw. Vermeidung des Fehlerbildes.

Bisher ist es nicht bekannt, Polytetrahydrofurane als Bindemittel in wässrigen Basislacken einzusetzen.

Die japanische Offenlegungsschrift JP 2005 - 220288 A beschreibt einen konventionellen lösemittelhaltigen Metallic-Basislack zur Verwendung in OEM-Lackierungen, der unter anderem Polyetherpolyole, darunter auch Polytetrahydrofurane, enthalten kann, um den Flip-Flop-Effekt und die Abplatzfestigkeit des Lacks zu verbessern. Aufgabe der JP 2005 - 220288 ist die Bereitstellung eines Metallic-Basislacks mit geringer Farbtonschwankung, hoher Transparenz, guten Glanzeigenschaften und Flip-Flop-Effekt. Die hierfür benötigte Bindemittelzusammensetzung des Basislacks wird in der JP 2005 - 220288 detailliert definiert.

Die japanische Patentanmeldung JP 62073944 beschreibt die Verwendung von Polytetrahydrofuran in wasserresistenten Beschichtungen zur Verwendung als Fassadenfarben. Der Vorteil dieser Farben liegt in der hohen Wasserresistenz der Beschichtungen.

### Aufgabe der Erfindung

Der vorliegenden Erfindung liegt die Aufgabe zugrunde, einen neuen wässrigen Beschichtungsstoff, enthaltend mindestens ein gesättigtes, ungesättigtes und/oder mit olefinisch ungesättigten Verbindungen gepfropftes, ionisch und/oder nichtionisch stabilisiertes Polyurethan, bereitzustellen, der einfach herzustellen ist und nach der Spritzapplikation eine verbesserte Schleifriefenabdeckung aufweist.

Der neue wässrige Beschichtungsstoff soll sich insbesondere als Wasserbasislack zur Herstellung von farb- und/oder effektgebenden Basislackierungen von Mehrschichtlackierungen nach dem Nass-in-nass-Verfahren eignen.

Der neue wässrige Beschichtungsstoff soll Beschichtungen, vorzugsweise farb- und/oder effektgebende Beschichtungen, bevorzugt Basislackierungen und Unidecklackierungen, insbesondere Basislackierungen in Mehrschichtlackierungen, liefern, die nach der Spritzapplikation kaum Schleifriefen mehr aufweisen.

### Erfindungsgemäße Lösung

Die vorstehend genannten Aufgaben werden durch einen neuen Beschichtungsstoff der eingangs genannten Art gelöst, der dadurch gekennzeichnet ist, dass der Beschichtungsstoff zwischen 0,5 und 30 Gew.-% Polytetrahydrofuran, bezogen auf das Gesamtgewicht des Beschichtungsstoffs, enthält.

Außerdem wurde ein neues Verfahren zur Herstellung eines erfindungsgemäßen wässrigen Beschichtungsstoffs gefunden, das dadurch gekennzeichnet ist, dass man mindestens ein gesättigtes, ungesättigtes und/oder mit olefinisch ungesättigten Verbindungen gepfropftes, ionisch und/oder nichtionisch stabilisiertes Polyurethan, und zwischen 0,5 und 30 Gew.% Polytetrahydrofuran, bezogen auf das Gesamtgewicht des Beschichtungsstoffs, in einem wäßrigen Medium dispergiert.

Nicht zuletzt wurde die neue Verwendung des erfindungsgemäßen Beschichtungsstoffs und des nach dem erfindungsgemäßen Verfahren hergestellten Beschichtungsstoffs für die Herstellung von farb- und/oder effektgebenden Mehrschichtlackierungen gefunden, was im folgenden als »erfindungsgemäße Verwendung« bezeichnet wird.

Weitere Erfindungsgegenstände gehen aus den Patentansprüchen und der folgenden Beschreibung hervor.

### Vorteile der Erfindung

Im Hinblick auf den Stand der Technik ist es überraschend und für den Fachmann nicht vorhersehbar, dass die Aufgabe, die der vorliegenden Erfindung zugrunde liegt, mit Hilfe des erfindungsgemäßen Beschichtungsstoffs, des erfindungsgemäßen Verfahrens und der erfindungsgemäßen Verwendung gelöst wird.

Insbesondere ist es überraschend, dass der erfindungsgemäße Beschichtungsstoff einfach herzustellen ist, keine toxikologisch bedenklichen Bestandteile mehr enthält und nach der Spritzapplikation keine oder nur sehr wenige Schleifriefen aufweist.

Überraschenderweise kann der erfindungsgemäße Beschichtungsstoff im Rahmen der erfindungsgemäßen Verwendung als Wasserbasislack zur Herstellung von farb- und/oder effektgebenden Basislackierungen von Mehrschichtlackierungen nach dem Nass-in-nass-Verfahren verwendet werden. Dabei zeigt die Lackierung keine oder nur sehr wenige Schleifriefen.

Der erfindungsgemäße Beschichtungsstoff liefert im Rahmen der erfindungsgemäßen Verwendung erfindungsgemäße Beschichtungen, vorzugsweise farb- und/oder effektgebende Beschichtungen, bevorzugt Basislackierungen und Unidecklackierungen, insbesondere Basislackierungen in Mehrschichtlackierungen, die keine oder nur sehr wenige Schleifriefen aufweisen. Darüber hinaus weisen sie ein besonders hohes Deckvermögen und einen hervorragenden optischen Gesamteindruck (Appearance) auf. Der erfindungsgemäße Beschichtungsstoff ist daher hervorragend für die Lackierung von Automobilkarosserien geeignet.

### Ausführliche Beschreibung der Erfindung

Der erste wesentliche Bestandteil des erfindungsgemäßen Beschichtungsstoffs ist mindestens ein gesättigtes, ungesättigtes und/oder mit olefinisch ungesättigten Verbindungen gepfropftes, ionisch und/oder nichtionisch stabilisiertes Polyurethan, vorzugsweise auf der Basis aliphatischer, cycloaliphatischer, aliphatischcycloaliphatischer, aromatischer, aliphatisch-aromatischer und/oder cycloaliphatischaromatischer Polyisocanate. Zur Stabilisierung enthält das Polyurethan entweder
- kationische Gruppen und/oder funktionelle Gruppen, die durch Neutralisationsmittel und/oder Quaternisierungsmittel in Kationen überführt werden können, oder
- anionische Gruppen und/oder funktionelle Gruppen, die durch Neutralisationsmittel in Anionen überführt werden können, und/oder
- nichtionische hydrophile Gruppen.

Geeignete Polyurethane sind beispielsweise aus
- der deutschen Patentanmeldung DE 199 11 498 A1, Spalte 1, Zeilen 29 bis 49, und Spalte 4, Zeile 23, bis Spalte 11, Zeile 5,
- der deutschen Patentanmeldung DE 199 48 004 A1, Seite 4, Zeile 19, bis Seite 13, Zeile 48,
- der europäischen Patentanmeldung EP 0 228 003 A1, Seite 3, Zeile 24, bis Seite 5, Zeile 40,
- der europäischen Patentanmeldung EP 0 634 431 A1, Seite 3, Zeile 38, bis Seite 8, Zeile 9, oder
- der internationalen Patentanmeldung WO 92/15405, Seite 2, Zeile 35, bis Seite 10, Zeile 32,
bekannt.

In dem efindungsgemäßen Beschichtungsstoff sind sie in den üblichen und bekannten Mengen enthalten.

Ist der erfindungsgemäße Beschichtungsstoff physikalisch, thermisch selbst vernetzend oder thermisch selbst vernetzend und mit aktinischer Strahlung härtbar, liegt sein Gehalt an Polyurethanen vorzugsweise bei 50 bis 100 Gew.-%, bevorzugt 50 bis 90 Gew.-% und insbesondere 50 bis 80 Gew.%, jeweils bezogen auf den filmbildenden Festkörper des erfindungsgemäßen Beschichtungsstoffs.

Ist der erfindungsgemäße Beschichtungsstoff thermisch fremdvernetzend oder thermisch fremdvernetzend und mit aktinischer Strahlung härtbar, liegt sein Gehalt an Polyurethanen vorzugsweise bei 10 bis 80, bevorzugt 15 bis 75 und insbesondere 20 bis 70 Gew.-%, jeweils bezogen auf den filmbildenden Festkörper des erfindungsgemäßen Beschichtungsstoffs.

Der erfindungsgemäße Beschichtungsstoff ist physikalisch, thermisch oder thermisch und mit aktinischer Strahlung härtbar. Dabei kann die thermisch oder thermisch und mit aktinischer Strahlung erfolgende Härtung durch die physikalische Härtung unterstützt werden.

Im Rahmen der vorliegenden Erfindung bedeutet der Begriff "physikalische Härtung" die Härtung einer Schicht aus einem Beschichtungsstoff durch Verfilmung, gegebenenfalls nach der Trocknung der Schicht. Üblicherweise sind hierfür keine Vernetzungsmittel notwendig. Gegebenenfalls kann die physikalische Härtung durch Luftsauerstoff oder durch Bestrahlen mit aktinischer Strahlung unterstützt werden.

Im Rahmen der vorliegenden Erfindung bedeutet der Begriff "thermische Härtung" die durch Hitze initiierte Härtung einer Schicht aus einem Beschichtungsstoff, bei der üblicherweise ein separat vorliegendes Vernetzungsmittel angewandt wird. Das Vernetzungsmittel enthält reaktive funktionelle Gruppen, die zu den in den Polyurethanen vorhandenen reaktiven funktionellen Gruppen komplementär sind. Üblicherweise wird dies von der Fachwelt als Fremdvernetzung bezeichnet. Sind bereits die komplementären reaktiven funktionellen Gruppen oder autoreaktive funktionelle Gruppen, d. h. Gruppen, die "mit sich selbst" reagieren, in den Polyurethanen vorhanden, sind diese selbst vernetzend. Beispiele geeigneter komplementärer reaktiver funktioneller Gruppen und autoreaktiver funktioneller Gruppen sind aus der deutschen Patentanmeldung DE 199 30 665 A1, Seite 7, Zeile 20, bis Seite 9, Zeile 8, bekannt.

Im Rahmen der vorliegenden Erfindung ist unter aktinischer Strahlung elektromagnetische Strahlung wie nahes Infrarot (NIR), sichtbares Licht, UV-Strahlung, Röntgenstrahlung oder gamma-Strahlung, insbesondere UV-Strahlung, und Korpuskularstrahlung wie Elektronenstrahlung, Betastrahlung, Alphastrahlung, Protonenstrahlung oder Neutronenstrahlung, insbesondere Elektronenstrahlung, zu verstehen. Die Härtung durch UV-Strahlung wird üblicherweise durch radikalische oder kationische Photoinitiatoren initiiert.

Werden die thermische Härtung und die Härtung mit aktinischem Licht bei einem erfindungsgemäßen Beschichtungsstoff gemeinsam angewandt, spricht man auch von "Dual Cure".

Der erfindungsgemäße Beschichtungsstoff kann ein Einkomponenten(1K)-System sein.

Im Rahmen der vorliegenden Erfindung kann ein Einkomponenten(1K)-System ein thermisch härtender Beschichtungsstoff sein, bei dem das Bindemittel und das Vernetzungsmittel nebeneinander, d.h. in einer Komponente, vorliegen. Voraussetzung hierfür ist, dass die beiden Bestandteile erst bei höheren Temperaturen und/oder bei Bestrahlen mit aktinischer Strahlung miteinander vernetzen.

Der erfindungsgemäße Beschichtungsstoff kann des weiteren ein Zweikomponenten(2K)- oder Mehrkomponenten (beispielsweise 3K, 4K)-System sein.

Im Rahmen der vorliegenden Erfindung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Der zweite wesentliche Bestandteil des erfindungsgemäßen Beschichtungsstoffs ist Polytetrahydrofuran.

Vorzugsweise werden Polytetrahydrofurane eingesetzt, die eine zahlenmittlere molare Masse von 250 - 10.000 aufweisen. Besonders bevorzugt werden Polytetrahydrofurane eingesetzt, die eine zahlenmittlere molare Masse von 250 - 2000 aufweisen.

Polytetrahydrofurane sind übliche und bekannte, im Handel erhältliche Produkte. Beispielsweise werden diese unter der Marke PolyTHF® von der Firma BASF AG vertrieben.

Der Gehalt an Polytetrahydrofuran im erfindungsgemäßen Beschichtungsstoff kann breit variieren und so optimal den Erfordernissen des Einzelfalls angepasst werden. Im Hinblick auf die Kosten des Polytetrahydrofurans ist man aber bestrebt, den Gehalt an Polytetrahydrofuran so gering wie möglich zu halten. Hierbei ist es ein besonderer Vorteil, dass ein Gehalt des erfindungsgemäßen Beschichtungsstoffs an Polytetrahydrofuran von 0,5 bis 30, bevorzugt 0,5 bis 20 und insbesondere 1 bis 15 Gew.-%, jeweils bezogen auf den erfindungsgemäßen Beschichtungsstoff, ausreicht, um die vorteilhaften technischen Effekte der Erfindung zu erzielen.

Darüber hinaus kann der erfindungsgemäße Beschichtungsstoff noch mindestens einen Zusatzstoff enthalten. Vorzugsweise enthält er mindestens zwei Zusatzstoffe. Bevorzugt wird der Zusatzstoff aus der Gruppe der auf dem Gebiet der Beschichtungsstoffe üblicherweise verwendeten Zusatzstoffe ausgewählt. Besonders bevorzugt wird der Zusatzstoff aus der Gruppe, bestehend aus rückstandsfrei oder im Wesentlichen rückstandsfrei thermisch zersetzbaren Salzen, von den Polyurethanen verschiedenen physikalisch, thermisch und/oder mit aktinischer Strahlung härtbaren Bindemitteln, Vernetzungsmitteln, organischen Lösemitteln, thermisch härtbaren Reaktiwerdünnern, mit aktinischer Strahlung härtbaren Reaktiwerdünnern, farb- und/oder effektgebenden Pigmenten, transparenten Pigmenten, Füllstoffen, molekulardispers löslichen Farbstoffen, Nanopartikeln, Lichtschutzmitteln, Antioxidantien, Entlüftungsmitteln, Emulgatoren, Slipadditiven, Polymerisationsinhibitoren, Initiatoren der radikalischen Polymerisation, thermolabilen radikalischen Initiatoren; Haftvermittlern, Verlaufmitteln, filmbildenden Hilfsmitteln, Verdickem, Rheologiehilfsmitteln, Flammschutzmitteln, Korrosionsinhibitoren, Rieselhilfen, Wachsen, Sikkativen, Bioziden und Mattierungsmitteln, ausgewählt.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- der deutschen Patentanmeldung DE 199 11 498 A1, Spalte 11, Zeile 9, bis Spalte 15, Zeile 63, oder
- dem deutschen Patent DE 100 43 405 C1, Spalte 5, Absätze [0031] bis [0033],
bekannt. Sie werden in den üblichen und bekannten, wirksamen Mengen eingesetzt.

Der Festkörpergehalt des erfindungsgemäßen Beschichtungsstoffs kann sehr breit variieren und daher den Erfordernissen des Einzelfalls optimal angepasst werden. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann. Der Festkörpergehalt wird als nichtflüchtiger Massenanteil nach Trocknung bei 120°C für 60 Minuten bestimmt. Vorzugsweise liegt der so bestimmte Festkörpergehalt bei 5 bis 70, bevorzugt 10 bis 65 und insbesondere 15 bis 60 Gew.-%, jeweils bezogen auf den erfindungsgemäßen Beschichtungsstoff.

Die Herstellung des erfindungsgemäßen Beschichtungsstoffs erfolgt vorzugsweise mit Hilfe des erfindungsgemäßen Verfahrens. Dabei werden die vorstehend beschriebenen Bestandteile in einem wässrigen Medium, insbesondere in Wasser, dispergiert, vorzugsweise unter Zusatz eines Netz- oder Dispergierungsmittels. Vorzugsweise wird die resultierende Mischung anschliessend homogenisiert.

Als wäßriges Medium eignen sich beispielsweise Wasser oder ein Medium, das neben Wasser noch ein oder mehrere organische Lösemittel enthält.

Als Netz- oder Dispergierungsmittel können beispielsweise Tenside, Polyethylenoxide oder Polypropylenoxide eingesetzt werden.

Methodisch gesehen weist der Dispergierprozess des erfindungsgemäßen Verfahrens keine Besonderheiten auf, sondern kann mit Hilfe der üblichen und bekannten Mischverfahren und Mischaggregate, wie Rührkessel, Dissolver, Rührwerksmühlen, Kneter, statischer Mischer oder Extruder, durchgeführt werden.

Die Homogenisierung der entstehenden Mischung kann ebenfalls mit Hilfe der üblichen und bekannten Homogenisierungsverfahren und Homogenisatoren, wie beispielsweise Rührer oder Dissolver, durchgeführt werden.

Besonders bevorzugt werden die erfindungsgemäßen Beschichtungsstoffe als Unidecklacke zur Herstellung einschichtiger Unidecklackierungen oder als Wasserbasislacke zur Herstellung farb- und/oder effektgebender Mehrschichtlackierungen eingesetzt. Ganz besonders bevorzugt werden sie dabei als Wasserbasislacke zur Herstellung farb- und/oder effektgebender Basislackierungen von Mehrschichtlackierungen, bevorzugt Mehrschichtlackierungen für Automobilkarosserien oder Teile von Automobilkarosserien, verwendet. Hierbei sind sie hervorragend für die Erstlackierung (OEM) und die Reparaturlackierung geeignet.

Ganz besonders bevorzugt werden die erfindungsgemäßen Mehrschichtlackierungen durch Nass-in-nass-Verfahren hergestellt, bei denen man
(1) mindestens einen Wasserbasislack auf ein grundiertes oder ungrundiertes Substrat appliziert, wodurch mindestens eine Wasserbasislackschicht (1) resultiert,
(2) mindestens einen Klarlack auf die Wasserbasislackschicht(en) (1) appliziert, wodurch mindestens eine Klarlackschicht (2) resultiert, und
(3) zumindest die Wasserbasislackschicht(en) (1) und die Klarlackschicht(en) (2) gemeinsam härtet, wodurch die Basislackierung (1) und die Klarlackierung (2) resultieren.

Beispiele solcher Nass-in-nass-Verfahren sind aus
- der deutschen Patentanmeldung DE 199 48 004 A1, Seite 17, Zeile 37, bis Seite 19, Zeile 22, oder
- dem deutschen Patent DE 100 43 405 C1, Spalte 3, Absatz [0019], und Spalte 8, Absatz [0052] bis Spalte 9, Absatz [0057] i. V. m. Spalte 6, Absatz [0039] bis Spalte 8, Absatz [0050],
bekannt. Die dort beschriebenen Schichtdicken können für die einzelnen Lackierungen der erfindungsgemäßen Mehrschichtlackierung angewandt werden.

Im folgenden wird die Erfindung durch Beispiele näher erläutert.

### Beispiele

### Herstellbeispiel 1

### Die Herstellung eines grauen Wasserbasislacks 1

Zur besseren Beurteilung gegebenenfalls auftretender Lackstörungen wurde ein grauer Wasserbasislack verwendet, der nach der folgenden Vorschrift hergestellt wurde.

### Mischung 1a:

In einem Dissolver wurden 26 Gewichtsteile einer Dispersion eines anorganischen Verdickungsmittels (Natrium-Magnesium-Schichtsilikat, 3 **Gew.-%-ig** in Wasser) vorgelegt. Hierzu wurden 30 Gewichtsteile deionisiertes Wasser, 107,5 Gewichtsteile Butylglykol, 4,5 Gewichtsteile eines gemäß Seite 7, Zeile 55, bis Seite 8, Zeile 23, der deutschen Patentanmeldung DE 44 37 535 A1 hergestellten polyurethanmodifizierten Polyacrylates und 0,6 Gewichtsteile einer 20,5 Gew.-%-igen Lösung eines handelsüblichen Entschäumers (Nopco® DSX 1550 der Firma Cognis) unter Rühren zugegeben. Es resultierte die Mischung 1a.

### Mischung 1b:

Getrennt hiervon wurden 3,2 Gewichtsteile einer gemäß Beispiel D., Spalte 16, Zeilen 37 bis 59, der deutschen Patentanmeldung DE 40 09 858 A1 hergestellten, wässrigen Polyesterharzdispersion, 0,3 Gewichtsteile einer Tensidlösung, enthaltend 52 Gew.% Surfynol® 104 der Firma Air Products, 55 Gewichtsteile Butylglykol, 4,1 Gewichtsteile eines handelsüblichen, wasserverdünnbaren Melaminformaldehydharzes in n-Butanol (Cymel® 203 der Firma Surface Specialties Austria) und 0,3 Gewichtsteile einer 10 Gew.%-igen Lösung von Dimethylethanolamin in Wasser miteinander vermischt. Es resultierte die Mischung 1 b.

### Mischung 1c:

Die Mischungen 1a und 1b wurden miteinander vermischt. Es resultierte die Mischung 1c.

### Mischung 1d:

Die Mischung 1c wurde mit 6 Gewichtsteilen deionisiertem Wasser, 20,4 Gewichtsteilen eines gemäß Seite 19, Zeile 44, bis Seite 20, Zeile 7, der deutschen Patentanmeldung DE 199 48 004 A1 hergestellten acrylierten Polyurethans, 1,6 Gewichtsteilen einer Tensidlösung, enthaltend 52 Gew.% Surfynol® 104 der Firma Air Products, 48 Gewichtsteilen Butoxyethanol, 0,4 Gewichtsteilen einer 10 Gew.-%-igen Lösung von Dimethylethanolamin in Wasser, 1,6 Gewichtsteilen n-Butanol und 3,9 Gewichtsteilen einer 3 Gew.-%-igen Lösung eines Polyacrylat-Verdickungsmittels (Viscalex® der Firma Ciba) versetzt. Es resultierte die Mischung 1 d.

### Russpaste:

Die Russpaste wurde aus 25 Gewichtsteilen einer gemäß der internationalen Patentanmeldung WO 91/15528 (Seite 23, Zeile 29 bis Seite 24, Zeile 24) hergestellten Polyacrylatdispersion, 10 Gewichtsteilen Ruß, 0,1 Gewichtsteilen Methylisobutylketon, 1,36 Gewichtsteilen Dimethylethanolamin, 2 Gewichtsteilen eines handelsüblichen Polyethers (Pluriol® P900 der Firma BASF Aktiengesellschaft) und 61,45 Gewichtsteilen deionisiertem Wasser durch Vermischen hergestellt.

### Blaupaste:

Die Blaupaste wurde aus 19,4 Gewichtsteilen einer nach Spalte 16, Zeilen 10 bis 35, der deutschen Patentanmeldung DE 40 09 858 A1 hergestellten Polyurethandispersion, 13,5 Gewichtsteilen Paliogen® Blau L 6482 der Firma BASF AG, 4,3 Gewichtsteilen Butoxyethanol, 0,18 Gewichtsteilen Methylethylketon, 0,62 Gewichtsteilen Dimethylethanolamin, 1,2 Gewichtsteilen Pluriol® P900 der Firma BASF Aktiengesellschaft und 61 Gewichtsteilen Wasser durch Vermischen hergestellt.

### Pastenmischung:

Die Pastenmischung wurde aus 0,5 Gewichtsteilen der Russpaste, 0,1 Gewichtsteilen der Blaupaste und 0,5 Gewichtsteilen einer nach Ziffer 9 der deutschen Patentanmeldung DE 100 04 494 A1 hergestellten Paste hergestellt.

### Mischung 1e:

Die Mischung 1e wurde durch Vermischen der gesamten erhaltenen Pastenmischung und der gesamten erhaltenen Mischung 1d hergestellt.

### Aluminiumeffektpigmentpaste:

Die Aluminiumeffektpigmentpaste wurde aus 3,2 Gewichtsteilen einer ersten 65 Gew.-%-igen Aluminiumeffektpigment-Anteigung (Alu-Stapa-Hydrolux® 2153 der Firma Eckart) und 3,2 Gewichtsteilen einer zweiten 65 Gew.-%-igen Aluminiumeffektpigment-Anteigung (Alu-Starter-Hydrolux 8154 der Firma Eckart), 7,5 Gewichtsteilen Butylglykol und 5,0 Gewichtsteilen der gemäß Beispiel D., Spalte 16, Zeilen 37 bis 59, der deutschen Patentanmeldung DE 40 09 858 A1 hergestellten, wässrigen Polyesterharzdispersion hergestellt.

### Wasserbasislack 1:

Der Wasserbasislack 1 wurde durch Vermischen der gesamten erhaltenen Mischung 1e, der gesamten erhaltenen Aluminiumeffektpigmentpaste und zwei Gewichtsteilen Wasser hergestellt. Anschließend wurde er mit Dimethylethanolamin auf einen pH-Wert von 8 und mit deionisiertem Wasser auf eine Viskosität von 58 mPas bei einer Scherbelastung von 1.000/Sekunde, gemessen mit einem Rotations-Viskosimeter (Gerät Rheomat RM 180 der Firma Mettler-Toledo) bei 23°C, eingestellt.

### Wasserbasislack E2:

Zur Herstellung des erfindungsgemäßen Wasserbasislacks E2 wurde der Wasserbasislack 1 mit dem kommerziell erhältlichen Polytetrahydrofuran PolyTHF 1800® (BASF AG) in dem in Tabelle 1 angegebenen Mischungsverhältnis versetzt.

### Wasserbasislack E3:

Zur Herstellung des erfindungsgemäßen Wasserbasislacks E2 wurde der Wasserbasislack 1 mit dem kommerziell erhältlichen Polytetrahydrofuran PolyTHF 2000® (BASF AG) in dem in Tabelle 1 angegebenen Mischungsverhältnis versetzt.

**Tabelle 1: Zusammensetzung der Wasserbasislacke (WBL) 1 , E2 und E3**

| **WBL** | **WBL 1 [Gew.-%]** | **PolyTHF** | **[Gew.-%]** |
|---|---|---|---|
| 1 | 100 | - | - |
| E2 | 98 | PolyTHF 1800® | 2,0 |
| E3 | 98 | PolyTHF 2000® | 2,0 |

Die Gewichtsprozentangaben in Tabelle 1 beziehen sich auf das Gesamtgewicht des jeweiligen Beschichtungsstoffs.

Zur Bestimmung des Schleifriefenabdeckungsvermögens wurden Mehrschichtlackierungen mit den Wasserbasislacken 1, E2 und E3 nach der folgenden allgemeinen Vorschrift hergestellt:
Ein Coilblech der Abmessungen 30 x 60 cm wurde mit einem Füller lackiert und der Füller bei 160°C über einen Zeitraum von 20 Minuten eingebrannt. Auf diesem Blech wurde ein Schleifkreuz mittels eines Schleifpapieres, das 800 Partikel pro cm² auf der Oberfläche besitzt, aufgebracht, welches eine Tiefe von 2-4 µm und eine Furchenbreite von 2 cm aufwies. Anschließend wurde der entsprechende Basislack mit einer Schichtdicke von 8-12 µm appliziert. Anschließend wurde das resultierende Blech 10 Minuten bei 80°C getrocknet, und auf die getrocknete Wasserbasislackschicht wurde ein üblicher und bekannter Zweikomponentenklarlack appliziert. Anschließend wurden die Wasserbasislackschicht und Klarlackschicht in einem Umluftofen während 20 Minuten bei 140°C gemeinsam gehärtet.

Die Sichtbarkeit des Schleifkreuzes in der Mehrschichtlackierung wurde visuell bestimmt und auf einer Skala von 1 bis 5 beurteilt. Dabei geben hohe Zahlenwerte eine gute Sichtbarkeit des Schleifkreuzes und niedrige Zahlenwerte eine gute Abdeckung der Schleifkreuze an. Ausserdem wurde beurteilt, ob aufgrund der Sichtbarkeit der Schleifriefen eine Neulackierung erforderlich wäre ("nicht in Ordnung") oder nicht ("in Ordnung"). Tabelle 2 gibt einen Überblick über die Versuchsergebnisse.

**Tabelle 2: Sichtbarkeit der Schleifkreuze in den Mehrschichtlackierungen**

| **verwendeter WBL** | **Sichtbarkeit des Schleifkreuzes** | **Beurteilung** |
|---|---|---|
| E1 | 3 | nicht in Ordnung |
| E2 | 2-3 | in Ordnung |
| E3 | 2 | in Ordnung |

Die Versuchsergebnisse der Tabelle 2 untermauern, dass der Zusatz von Polytetrahydrofuran eine die Sichtbarkeit von Schleifriefen reduzierende beziehungsweise vermeidende Wirkung aufweist.

### Herstellbeispiel 2

### Die Herstellung eines silbernen Wasserbasislacks 2

Zur besseren Beurteilung gegebenenfalls auftretender Lackstörungen wurde ein silberner Wasserbasislack verwendet, der nach der folgenden Vorschrift hergestellt wurde.

### Mischung 2a:

In einem Dissolver wurden 29,5 Gewichtsteile einer Dispersion eines anorganischen Verdickungsmittels (Natrium-Magnesium-Schichtsilikat, 3 Gew.%-ig in Wasser) vorgelegt. Hierzu wurden 30 Gewichtsteile einer gemäß Spalte 16, Zeilen 10 bis 35 in DE 4009858-A1 hergestellten wäßrigen Polyurethandispersion gegeben. Es resultierte die Mischung 2a.

### Mischung 2b:

Getrennt hiervon wurden 5,7 Gewichtsteile eines handelsüblichen, wasserverdünnbaren Melaminformaldehydharzes in n-Butanol (Cymel® 327 der Firma Surface Specialties Austria), 1,1 Gewichtsteile Butylglykol und 1,6 Gewichtsteile einer Tensidlösung, enthaltend 52 Gew.% Surfynole® 104 der Firma Air Products vermischt. Es resultierte die Mischung 2b.

### Mischung 2c:

Die Mischungen 2a und 2b wurden miteinander vermischt. Es resultierte die Mischung 2c.

### Mischung 2d:

Die Mischung 2c wurde mit 0,9 Gewichtsteilen eines handelsüblichen Polyethers (Pluriol® P900 der Firma BASF Aktiengesellschaft), 2,4 Gewichtsteilen handelsüblichen iso-Propanol, 0,6 Gewichtsteilen handelsüblichen 2-Ethylhexanol und 2,1 Gewichtsteilen eines gemäß Seite 7, Zeile 55 bis Seite 8, Zeile 23 in DE 4437535-A1 hergestellten polyurethanmodifizierten Polyacrylates vermischt. Es resultierte die Mischung 2d.

### Russpaste:

Die Russpaste wurde aus 25 Gewichtsteilen einer gemäß der internationalen Patentanmeldung WO 91/15528 (Seite 23, Zeile 29 bis Seite 24, Zeile 24) hergestellten Polyacrylatdispersion, 10 Gewichtsteilen Ruß, 0,1 Gewichtsteilen Methylisobutylketon, 1,36 Gewichtsteilen Dimethylethanolamin, 2 Gewichtsteilen eines handelsüblichen Polyethers (Pluriol® P900 der Firma BASF Aktiengesellschaft) und 61,45 Gewichtsteilen deionisiertem Wasser durch Vermischen hergestellt.

### Blaupaste:

Die Blaupaste wurde aus 19,4 Gewichtsteilen einer nach Spalte 16, Zeilen 10 bis 35, der deutschen Patentanmeldung DE 40 09 858 A1 hergestellten Polyurethandispersion, 13,5 Gewichtsteilen Paliogen® Blau L 6482 der Firma BASF AG, 4,3 Gewichtsteilen Butoxyethanol, 0,18 Gewichtsteilen Methylethylketon, 0,62 Gewichtsteilen Dimethylethanolamin, 1,2 Gewichtsteilen Pluriol® P900 der Firma BASF Aktiengesellschaft und 61 Gewichtsteilen Wasser durch Vermischen hergestellt.

### Pastenmischung:

Die Pastenmischung wurde aus 1,2 Gewichtsteilen der Russpaste, 1,1 Gewichtsteilen der Blaupaste und 1,0 Gewichtsteilen einer nach Ziffer 9 der deutschen Patentanmeldung DE 100 04 494 A1 hergestellten Paste hergestellt.

### Aluminiumeffektpigmentpaste:

Die Aluminiumeffektpigmentpaste wurde aus 3,3 Gewichtsteilen einer ersten 65 Gew.-%-igen Aluminiumeffektpigment-Anteigung (Alu-Stapa-Hydrolux® 2192 der Firma Eckart), 4 Gewichtsteilen Butylglykol, 4 Gewichtsteilen der gemäß Beispiel D., Spalte 16, Zeilen 37 bis 59, der deutschen Patentanmeldung DE 40 09 858 A1 hergestellten, wässrigen Polyesterharzdispersion und 0,5 Gewichtsteilen einer 10 Gew.%-igen Lösung von Dimethylethanolamin in Wasser hergestellt.

Unter Verwendung dieser Bestandteile wurden der Wasserbasislack 2 (über die Mischung 2e) und der erfindungsgemäße Wasserbasislack E4 (über die Mischung E4e) wie folgt hergestellt.

### Mischung 2e:

Die Mischung 2e wurde durch Vermischen der gesamten erhaltenen Pastenmischung, der gesamten erhaltenen Mischung 2d, 1,3 Gewichtsteilen VE-Wasser und 5,1 Gewichtsteilen einer gemäß Beispiel D., Spalte 16, Zeilen 37 bis 59, der deutschen Patentanmeldung DE 40 09 858 A1 hergestellten, wässrigen Polyesterharzdispersion, 2 Gewichtsteilen handelsüblichen Butoxyethanol und 0,7 Gewichtsteilen einer 10 Gew.%-igen Lösung von Dimethylethanolamin in Wasser hergestellt.

### Wasserbasislack 2:

Der Wasserbasislack 2 wurde durch Vermischen der gesamten erhaltenen Mischung 2e, der gesamten erhaltenen Aluminiumeffektpigmentpaste und 1,6 Gewichtsteilen Wasser hergestellt. Anschließend wurde er mit Dimethylethanolamin auf einen pH-Wert von 8 und mit deionisiertem Wasser auf eine Viskosität von 65 mPas bei einer Scherbelastung von 1.000/Sekunde, gemessen mit einem Rotations-Viskosimeter (Gerät Rheomat RM 180 der Firma Mettler-Toledo) bei 23°C, eingestellt.

### Mischung E4e:

Die Mischung E4e wurde durch Vermischen der gesamten erhaltenen Pastenmischung, der gesamten erhaltenen Mischung 2d, 1,3 Gewichtsteilen VE-Wasser und 15 Gewichtsteilen eines kommerziell erhältlichen Polytetrahydrofuran PolyTHF 2000® (BASF AG), 2 Gewichtsteilen handelsüblichen Butoxyethanol und 0,7 Gewichtsteilen einer 10 Gew.-%-igen Lösung von Dimethylethanolamin. in Wasser hergestellt.

### Wasserbasislack E4:

Der Wasserbasislack E4 wurde durch Vermischen der gesamten erhaltenen Mischung E4e, der gesamten erhaltenen Aluminiumeffektpigmentpaste und 1,6 Gewichtsteilen Wasser hergestellt. Anschließend wurde er mit Dimethylethanolamin auf einen pH-Wert von 8 und mit deionisiertem Wasser auf eine Viskosität von 65 mPas bei einer Scherbelastung von 1.000/Sekunde, gemessen mit einem Rotations-Viskosimeter (Gerät Rheomat RM 180 der Firma Mettler-Toledo) bei 23°C, eingestellt.

**Tabelle 3: Zusammensetzung der Wasserbasislacke (WBL) 2 und E4**

| **WBL** | **WBL [Gew.-%]** | **PolyTHF** | **[Gew.-%]** |
|---|---|---|---|
| 2 | 100 | - | - |
| E4 | 86,3 | PolyTHF 2000® | 13,7 |

Die Gewichtsprozentangaben in Tabelle 3 beziehen sich auf das Gesamtgewicht des jeweiligen Beschichtungsstoffs.

Zur Bestimmung des Schleifriefenabdeckungsvermögens wurden Mehrschichtlackierungen mit den Wasserbasislacken 2 und E4 nach der folgenden allgemeinen Vorschrift hergestellt:
Ein Coilblech der Abmessungen 30 x 60 cm wurde mit einem Füller lackiert und der Füller bei 160°C über einen Zeitraum von 20 Minuten eingebrannt. Auf diesem Blech wurde ein Schleifkreuz mittels eines Schleifpapieres, das 800 Partikel pro cm² auf der Oberfläche besitzt, aufgebracht, welches eine Tiefe von 2-4 µm und eine Furchenbreite von 2 cm aufwies. Anschließend wurde der entsprechende Basislack mit einer Schichtdicke von 8-12 µm appliziert. Anschließend wurde das resultierende Blech 10 Minuten bei 80°C getrocknet, und auf die getrocknete Wasserbasislackschicht wurde ein üblicher und bekannter Zweikomponentenklarlack appliziert. Anschließend wurden die Wasserbasislackschicht und Klarlackschicht in einem Umluftofen während 20 Minuten bei 140°C gemeinsam gehärtet.

Die Sichtbarkeit des Schleiffkreuzes in der Mehrschichtlackierung wurde visuell bestimmt und auf einer Skala von 1 bis 5 beurteilt. Dabei geben hohe Zahlenwerte eine gute Sichtbarkeit des Schleifkreuzes und niedrige Zahlenwerte eine gute Abdeckung der Schleifkreuze an. Ausserdem wurde beurteilt, ob aufgrund der Sichtbarkeit der Schleifriefen eine Neulackierung erforderlich wäre ("nicht in Ordnung") oder nicht ("in Ordnung"). Tabelle 4 gibt einen Überblick über die Versuchsergebnisse.

**Tabelle 4: Sichtbarkeit der Schleifkreuze in den Mehrschichtlackierungen**

| **verwendeter WBL** | **Sichtbarkeit des Schleifkreuzes** | **Beurteilung** |
|---|---|---|
| 2 | 4 | nicht in Ordnung |
| E4 | 3 | in Ordnung |

Die Versuchsergebnisse der Tabelle 4 untermauern, dass der Zusatz von Polytetrahydrofuran eine die Sichtbarkeit von Schleifriefen reduzierende beziehungsweise vermeidende Wirkung aufweist.

## Patentansprüche

1. Wäßriger Beschichtungsstoff, enthaltend mindestens ein gesättigtes, ungesättigtes und/oder mit olefinisch ungesättigten Verbindungen gepropftes, ionisch und/oder nichtionisch stabilisiertes Polyurethan, **dadurch gekennzeichnet, dass** der Beschichtungsstoff zwischen 0,5 und 30 Gew.% Polytetrahydrofuran, bezogen auf das Gesamtgewicht des Beschichtungsstoffs, enthält.

2. Wäßriger Beschichtungsstoff nach Anspruch 1, **dadurch gekennzeichnet, dass** er zwischen 0,5 und 20 Gew.% Polytetrahydrofuran, bezogen auf das Gesamtgewicht des Beschichtungsstoffs, enthält.

3. Wäßriger Beschichtungsstoff nach Anspruch 1, **dadurch gekennzeichnet, dass** er zwischen 1 und 15 Gew.-% Polytetrahydrofuran, bezogen auf das Gesamtgewicht des Beschichtungsstoffs, enthält.

4. Wäßriger Beschichtungsstoff nach einem der Ansprüche 1 bis 3, **dadurch gekennzeichnet, dass** das Polytetrahydrofuran eine zahlenmittlere molare Masse von 250 bis 10.000 aufweist.

5. Wäßriger Beschichtungsstoff nach einem der Ansprüche 1 bis 3, **dadurch gekennzeichnet, dass** das Polytetrahydrofuran eine zahlenmittlere molare Masse von 250 bis 2.000 aufweist.

6. Wäßriger Beschichtungsstoff nach einem der Ansprüche 1 bis 5, **dadurch gekennzeichnet, dass** er mindestens einen Zusatzstoff, ausgewählt aus der Gruppe bestehend aus rückstandsfrei oder im Wesentlichen rückstandsfrei thermisch zersetzbaren Salzen, von den Polyurethanen verschiedenen physikalisch, thermisch und/oder mit aktinischer Strahlung härtbaren Bindemitteln, Vernetzungsmitteln, organischen Lösemitteln, thermisch härtbaren Reaktiwerdünnern, mit aktinischer Strahlung härtbaren Reaktiwerdünnern, farb- und/oder effektgebenden Pigmenten, transparenten Pigmenten, Füllstoffen, molekulardispers löslichen Farbstoffen, Nanopartikeln, Lichtschutzmitteln, Antioxidantien, Entlüftungsmitteln, Emulgatoren, Slipadditiven, Polymerisationsinhibitoren, Initiatoren der radikalischen Polymerisation, thermolabilen radikalischen Initiatoren, Haftvermittlern, Verlaufmitteln, filmbildenden Hilfsmitteln, Verdickern, Rheologiehilfsmitteln, Flammschutzmitteln, Korrosionsinhibitoren, Rieselhilfen, Wachsen, Sikkativen, Bioziden und Mattierungsmitteln, enthält.

7. Wäßriger Beschichtungsstoff nach Anspruch 6, **dadurch gekennzeichnet, dass** er mindestens zwei Zusatzstoffe, ausgewählt aus der in Anspruch 6 genannten Gruppe, enthält.

8. Wäßriger Beschichtungsstoff nach einem der Ansprüche 1 bis 7, **dadurch gekennzeichnet, dass** er einen Festkörpergehalt von 5 bis 70 Gew.-%, bezogen auf das Gesamtgewicht des Beschichtungsstoffs, aufweist.

9. Wäßriger Beschichtungsstoff nach einem der Ansprüche 1 bis 7, **dadurch gekennzeichnet, dass** er einen Festkörpergehalt von 10 bis 65 Gew.%, bezogen auf das Gesamtgewicht des Beschichtungsstoffs, aufweist.

10. Wäßriger Beschichtungsstoff nach einem der Ansprüche 1 bis 7, **dadurch gekennzeichnet, dass** er einen Festkörpergehalt von 15 bis 60 Gew.%, bezogen auf das Gesamtgewicht des Beschichtungsstoffs, aufweist.

11. Verfahren zur Herstellung eines wäßrigen Beschichtungsstoffs nach einem der Ansprüche 1 bis 10, **dadurch gekennzeichnet, dass** man mindestens ein gesättigtes, ungesättigtes und/oder mit olefinisch ungesättigten Verbindungen gepropftes, ionisch und/oder nichtionisch stabilisiertes Polyurethan, und zwischen 0,5 und 30 Gew.-% Polytetrahydrofuran, bezogen auf das Gesamtgewicht des Beschichtungsstoffs, in einem wäßrigen Medium dispergiert.

12. Verfahren nach Anspruch 11, **dadurch gekennzeichnet, dass** vor dem Dispergieren mindestens ein Netz- oder Dispergierungsmittel hinzugefügt wird.

13. Verfahren nach einem der Ansprüche 11 oder 12, **dadurch gekennzeichnet, dass** die entstandene Dispersion anschließend homogenisiert wird.

14. Verwendung eines wäßrigen Beschichtungsstoffs nach einem der Ansprüche 1 bis 10 oder eines nach den Ansprüchen 11 bis 13 hergestellten wäßrigen Beschichtungsstoffs, **dadurch gekennzeichnet, dass** der Beschichtungsstoff als Wasserbasislack für die Herstellung einer farb- und/oder effektgebenden Mehrschichtlackierung verwendet wird.

15. Verwendung nach Anspruch 14, **dadurch gekennzeichnet, dass** die farb- und/oder effektgebende Mehrschichtlackierung nach dem Nass-in-nass-Verfahren hergestellt wird.

16. Verwendung nach einem der Ansprüche 14 oder 15, **dadurch gekennzeichnet, dass** die Mehrschichtlackierung auf Automobilkarosserien oder Teile davon aufgebracht wird.

## Claims

1. Aqueous coating material comprising at least one ionically and/or nonionically stabilized polyurethane which is saturated, unsaturated and/or grafted with olefinically unsaturated compounds, **characterized in that** said coating material contains between 0.5% and 30% by weight of polytetrahydrofuran, based on the total weight of the coating material.

2. Aqueous coating material according to Claim 1, **characterized in that** it contains between 0.5% and 20% by weight of polytetrahydrofuran, based on the total weight of the coating material.

3. Aqueous coating material according to Claim 1, **characterized in that** it contains between 1% and 15% by weight of polytetrahydrofuran, based on the total weight of the coating material.

4. Aqueous coating material according to any of Claims 1 to 3, **characterized in that** the polytetrahydrofuran has a number-average molar mass of 250 to 10 000.

5. Aqueous coating material according to any of Claims 1 to 3, **characterized in that** the polytetrahydrofuran has a number-average molar mass of 250 to 2000.

6. Aqueous coating material according to any of Claims 1 to 5, **characterized in that** it comprises at least one additive selected from the group consisting of salts which can be decomposed thermally without residue or substantially without residue, binders, other than the polyurethanes, which are curable physically, thermally and/or with actinic radiation, crosslinking agents, organic solvents, thermally curable reactive diluents, reactive diluents curable with actinic radiation, color and/or effect pigments, transparent pigments, fillers, molecularly dispersely soluble dyes, nanoparticles, light stabilizers, antioxidants, devolatilizers, emulsifiers, slip additives, polymerization inhibitors, free-radical polymerization initiators, thermolabile free-radical initiators, adhesion promoters, flow control agents, film-forming assistants, thickeners, rheological assistants, flame retardants, corrosion inhibitors, free-flow aids, waxes, siccatives, biocides, and matting agents.

7. Aqueous coating material according to Claim 6, **characterized in that** it comprises at least two additives selected from the group given in Claim 6.

8. Aqueous coating material according to any of Claims 1 to 7, **characterized in that** it has a solids content of 5% to 70% by weight, based on the total weight of the coating material.

9. Aqueous coating material according to any of Claims 1 to 7, **characterized in that** it has a solids content of 10% to 65% by weight, based on the total weight of the coating material.

10. Aqueous coating material according to any of Claims 1 to 7, **characterized in that** it has a solids content of 15% to 60% by weight, based on the total weight of the coating material.

11. Process for preparing an aqueous coating material according to any of Claims 1 to 10, **characterized in that** at least one ionically and/or nonionically stabilized polyurethane which is saturated, unsaturated and/or grafted with olefinically unsaturated compounds, and between 0.5% and 30% by weight of polytetrahydrofuran, based on the total weight of the coating material, are dispersed in an aqueous medium.

12. Process according to Claim 11, **characterized in that** at least one wetting agent or dispersant is added prior to said dispersing.

13. Process according to either of Claims 11 and 12, **characterized in that** the resulting dispersion is then homogenized.

14. Use of an aqueous coating material according to any of Claims 1 to 10 or of an aqueous coating material prepared according to any of Claims 11 to 13, **characterized in that** the coating material is used as aqueous basecoat material for producing a multicoat color and/or effect paint system.

15. Use according to Claim 14, **characterized in that** the multicoat color and/or effect paint system is produced by the wet-on-wet method.

16. Use according to either of Claims 14 and 15, **characterized in that** the multicoat paint system is applied to automobile bodies or parts thereof.

## Revendications

1. Revêtement aqueux, contenant au moins un polyuréthane saturé, insaturé et/ou greffé par des composés oléfiniquement insaturés, stabilisé de manière ionique et/ou non ionique, **caractérisé en ce que** le revêtement contient entre 0,5 et 30% en poids de polytétrahydrofuranne, par rapport au poids total du revêtement.

2. Revêtement aqueux selon la revendication 1, **caractérisé en ce qu'**il contient entre 0,5 et 20% en poids de polytétrahydrofuranne, par rapport au poids total du revêtement.

3. Revêtement aqueux selon la revendication 1, **caractérisé en ce qu'**il contient entre 1 et 15% en poids de polytétrahydrofuranne, par rapport au poids total du revêtement.

4. Revêtement aqueux selon l'une quelconque des revendications 1 à 3, **caractérisé en ce que** le polytétrahydrofuranne présente une masse molaire numérique moyenne de 250 à 10 000.

5. Revêtement aqueux selon l'une quelconque des revendications 1 à 3, **caractérisé en ce que** le polytétrahydrofuranne présente une masse molaire numérique moyenne de 250 à 2000.

6. Revêtement aqueux selon l'une quelconque des revendications 1 à 5, **caractérisé en ce qu'**il contient au moins un additif, choisi dans le groupe constitué par les sels thermiquement décomposables sans résidus ou sensiblement sans résidus, les liants différents des polyuréthanes, durcissables par voie physique, thermodurcissables et/ou durcissables par un rayonnement actinique, les réticulants, les solvants organiques, les diluants réactifs thermodurcissables, les diluants réactifs durcissables par un rayonnement actinique, les pigments conférant une couleur et/ou un effet, les pigments transparents, les charges, les colorants solubles en dispersion moléculaire, les nanoparticules, les agents de protection contre la lumière, les antioxydants, les agents de désaération, les émulsifiants, les additifs de glissement, les inhibiteurs de polymérisation, les initiateurs de la polymérisation radicalaire, les initiateurs radicalaires thermolabiles, les promoteurs d'adhérence, les agents d'étalement, les adjuvants filmogènes, les épaississants, les adjuvants rhéologiques, les agents ignifuges, les inhibiteurs de corrosion, les auxiliaires d'écoulement, les cires, les dessiccatifs, les biocides et les agents de matage.

7. Revêtement aqueux selon la revendication 6, **caractérisé en ce qu'**il contient au moins deux additifs, choisis dans le groupe mentionné dans la revendication 6.

8. Revêtement aqueux selon l'une quelconque des revendications 1 à 7, **caractérisé en ce qu'**il présente une teneur en solides de 5 à 70% en poids, par rapport au poids total du revêtement.

9. Revêtement aqueux selon l'une quelconque des revendications 1 à 7, **caractérisé en ce qu'**il présente une teneur en solides de 10 à 65% en poids, par rapport au poids total du revêtement.

10. Revêtement aqueux selon l'une quelconque des revendications 1 à 7, **caractérisé en ce qu'**il présente une teneur en solides de 15 à 60% en poids, par rapport au poids total du revêtement.

11. Procédé pour la préparation d'un revêtement aqueux selon l'une quelconque des revendications 1 à 10, **caractérisé en ce qu'**on disperse au moins un polyuréthane saturé, insaturé et/ou greffé par des composés oléfiniquement insaturés, stabilisé de manière ionique et/ou non ionique, et entre 0,5 et 30°s en poids de polytétrahydrofuranne, par rapport au poids total du revêtement, dans un milieu aqueux.

12. Procédé selon la revendication 11, **caractérisé en ce qu'**un agent mouillant ou dispersant est ajouté avant la dispersion.

13. Procédé selon l'une quelconque des revendications 11 ou 12, **caractérisé en ce que** la dispersion obtenue est ensuite homogénéisée.

14. Utilisation d'un revêtement aqueux selon l'une quelconque des revendications 1 à 10 ou d'un revêtement aqueux préparé selon les revendications 11 à 13, **caractérisé en ce que** le revêtement est utilisé comme laque de base aqueuse pour la préparation d'un laquage à plusieurs couches conférant une couleur et/ou un effet.

15. Utilisation selon la revendication 14, **caractérisée en ce que** le laquage à plusieurs couches conférant une couleur et/ou un effet est préparé à l'aide du procédé humide-sur-humide.

16. Utilisation selon l'une quelconque des revendications 14 à 15, **caractérisée en ce que** le laquage à plusieurs couches est appliqué sur des carrosseries d'automobiles ou des pièces de celles-ci.
